# EUROPÄISCHE PATENTSCHRIFT

(11) **EP 4 103 888 B1**
(45) Veröffentlichungstag und Bekanntmachung des Hinweises auf die Patenterteilung: **15.01.2025**
(21) Anmeldenummer: 21712010.4
(22) Anmeldetag: 10.02.2021
(51) Int. Cl.: F24D 3/18, F25B 1/00, F24F 11/36, F24D 19/10, F24H 15/12, F25B 30/02, F25B 49/00

(54) **WÄRMEPUMPENANLAGE UND VERFAHREN ZUM BETRIEB EINER SOLCHEN WÄRMEPUMPENANLAGE**
HEAT PUMP SYSTEM AND METHOD FOR OPERATING A HEAT PUMP SYSTEM OF THIS TYPE
ENSEMBLE POMPE À CHALEUR ET PROCÉDÉ POUR FAIRE FONCTIONNER UN TEL ENSEMBLE POMPE À CHALEUR

(30) Priorität: 13.02.2020 DE 102020103743
(43) Veröffentlichungstag der Anmeldung: 21.12.2022
(73) Patentinhaber: Viessmann Climate Solutions SE, 35108 Allendorf (DE)
(72) Erfinder: IMMEL, Markus, 35075 Gladenbach (DE)
(74) Vertreter: Wolf & Wolf Patent- und Rechtanwaltsgesellschaft mbH
(86) Internationale Anmeldenummer: PCT/DE2021/100133
(87) Internationale Veröffentlichungsnummer: WO 2021/160221

(56) Entgegenhaltungen:
- EP-A1- 2 759 787
- EP-A1- 3 351 868
- EP-A1- 3 809 066
- EP-B1- 3 351 868
- WO-A1-2019/239556
- JP-A- 2016 095 130

## Beschreibung

Die Erfindung betrifft eine Wärmepumpenanlage gemäß dem Oberbegriff des Patentanspruchs 1 sowie ein Verfahren zum Betrieb einer solchen Wärmepumpenanlage gemäß dem Oberbegriff des Patentanspruchs 10.

Eine Wärmepumpenanlage der eingangs genannten Art ist aus dem Dokument EP 3 351 868 A1 bekannt, wobei bei dieser Lösung in Betriebsströmungsrichtung des Heizkreislaufmediums gesehen insbesondere ein der Heizkreispumpe nach- und der Sekundärseite vorgeschaltetes und bei einer der Betriebsströmungsrichtung entgegengesetzten Strömung des Heizkreislaufmediums schließend ausgebildetes Rückschlagventil vorgesehen ist und wobei der Sekundärseite in Betriebsströmungsrichtung gesehen eine Entgasungseinrichtung nachgeschaltet ist.

Eine weitere, ähnliche Wärmepumpenanlage ist aus dem Dokument DE 10 2011 011 210 A1 bekannt. Diese Wärmepumpenanlage besteht aus einem eine Primärseite und eine Sekundärseite aufweisenden Wärmeübertrager, einem Wärmepumpenkreislauf für ein die Primärseite des Wärmeübertragers durchströmendes Wärmepumpenkreislaufmedium und einem Heizkreislauf für ein die Sekundärseite des Wärmeübertragers durchströmendes Heizkreislaufmedium, wobei der Sekundärseite des Wärmeübertragers in Betriebsströmungsrichtung des Heizkreislaufmediums gesehen eine Heizkreispumpe vorgeschaltet ist. Bei dem genannten Heizkreislaufmedium handelt es sich dabei typischer Weise und auch nachfolgend vorzugsweise um Wasser. Außerdem gilt hier und im Folgenden, dass das Heizkreislaufmedium bei bestimmungsgemäßem Gebrauch der Wärmepumpenanlage nur in einer Richtung durch den Heizkreislauf gepumpt wird, nämlich in der vorgenannten Betriebsströmungsrichtung.

Der Erfindung liegt die Aufgabe zugrunde, eine Wärmepumpenanlage der eingangs genannten Art zu verbessern. Insbesondere soll eine bei einem Gasleck am Wärmeübertrager eine weitere Strömung im Heizkreislauf automatisch unterbindende Wärmepumpenanlage geschaffen werden.

Diese Aufgabe ist mit einer Wärmepumpenanlage der eingangs genannten Art durch die im Kennzeichen des Patentanspruchs 1 aufgeführten Merkmale gelöst. Verfahrensmäßig ist diese Aufgabe gemäß dem Kennzeichen des Patentanspruch 10 gelöst.

Nach der Erfindung ist also vorgesehen, dass die Entgasungseinrichtung ab einer vordefinierten Gasmenge im Heizkreislaufmedium eine Strömung des Heizkreislaufmediums in Betriebsströmungsrichtung unterbindend ausgebildet ist, wobei die Entgasungseinrichtung einen Schwimmer aufweist. Verfahrensmäßig ausgedrückt ist somit vorgesehen, dass ab einer vordefinierten Gasmenge des Wärmepumpenkreislaufmediums im Heizkreislaufmedium einerseits das Rückschlagventil schließt und andererseits die Entgasungseinrichtung eine Strömung des Heizkreislaufmediums in Betriebsströmungsrichtung unterbindet.

Nochmals mit anderen Worten zeichnet sich die erfindungsgemäße Wärmepumpenanlage somit dadurch aus, dass eine Strömung des Heizkreislaufmediums automatisch unterbunden wird, sollte es am Wärmeübertrager zu einem Gasleck, also einem Durchtritt von insbesondere brennbarem Wärmepumpenkreislaufmedium von der Primär- zur Sekundärseite des Wärmeübertagers, kommen. Dabei wird einerseits durch das Rückschlagventil gewährleistet, dass das Wärmepumpenkreislaufmedium nicht entgegen der Betriebströmungsrichtung des Heizkreislaufmediums in Richtung Pumpe strömt. Andererseits gewährleistet die Entgasungseinrichtung, dass sich das durchgetretene Wärmepumpenkreislaufmedium auch nicht in Betriebsströmungsrichtung des Heizkreislaufmediums ausbreitet. Dabei ist ferner besonders bevorzugt vorgesehen, dass die Heizkreispumpe bei Unterschreitung einer vorgegebenen Zufuhrmenge an Heizkreislaufmedium selbsttätig ausschaltend ausgebildet ist, d. h. im Falle des besagten Gaslecks wird nicht nur der Eintrag von insbesondere brennbarem Wärmepumpenkreislaufmedium in den Heizkreis wirksam unterbunden, sondern es ist sogar gewährleistet, dass die Zirkulation des Heizkreislaufes automatisch komplett abgeschaltet wird.

Andere vorteilhafte Weiterbildungen der erfindungsgemäßen Wärmepumpenanlage ergeben sich aus den abhängigen Patentansprüchen.

Der Vollständigkeit halber wird noch auf das Dokument DE 10 2016 106 061 A1 hingewiesen.

Die erfindungsgemäße Wärmepumpenanlage einschließlich ihrer vorteilhaften Weiterbildungen gemäß ihrer abhängigen Patentansprüche wird nachfolgend anhand der zeichnerischen Darstellung zweier Ausführungsbeispiele näher erläutert.

Es zeigt
- Figur 1: größtenteils schematisch die erfindungsgemäße Wärmepumpenanlage mit dem Rückschlagventil und der Entgasungseinrichtung;
- Figur 2: im Schnitt eine erste Ausführungsform der Entgasungseinrichtung; und
- Figur 3: im Schnitt einen Teil einer zweiten Ausführngsform der Entgasungseinrichtung.

Die in den Figuren dargestellte Wärmepumpenanlage besteht in bekannter Weise aus einem eine Primärseite 2.1 und eine Sekundärseite 2.2 aufweisenden Wärmeübertrager 2, einem Wärmepumpenkreislauf 1 für ein die Primärseite 2.1 des Wärmeübertragers 2 durchströmendes Wärmepumpenkreislaufmedium und aus einem Heizkreislauf 3 für ein die Sekundärseite 2.2 des Wärmeübertragers 2 durchströmendes Heizkreislaufmedium, wobei der Sekundärseite 2.2 des Wärmeübertragers 2 in Betriebsströmungsrichtung des Heizkreislaufmediums gesehen eine Heizkreispumpe 4 vorgeschaltet ist.

Weiterhin ist in an sich bekannter Weise bevorzugt vorgesehen, dass der Wärmepumpenkreislauf 1 neben dem Wärmeübertrager 2, eine Drosseleinrichtung 9, einen weiteren Wärmeübertrager 10 und einen Verdichter 11 aufweist. Sofern die Wärmepumpenanlage zur Beheizung eines Gebäudes verwendet wird (Heizbetrieb), arbeitet der Wärmeübertrager 2 dabei als Kondensator und der weitere Wärmeübertrager 10 als Verdampfer, dem Wärme typischer Weise über eine Umweltwärmequelle wie Luftwärme oder Erdwärme zugeführt wird. Wird die Wärmepumpenanlage dagegen (was auch möglich ist) zur Kühlung verwendet, ist der Wärmeübertrager 2 entsprechend als Verdampfer arbeitend ausgebildet.

Ferner ist bei Verwendung der Wärmepumpenanlage im Heizbetrieb in an sich bekannter Weise vorgesehen, dass der Heizkreislauf 3 wahlweise Wärmeabgabeeinrichtungen (zum Beispiel Heizkörper oder eine Fußbodenheizung) und/oder Wärmespeicher (zum Beispiel einen Warmwasserspeicher) umfasst.

Dabei ist weiterhin vorgesehen, dass erstens in Betriebsströmungsrichtung des Heizkreislaufmediums gesehen ein der Heizkreispumpe 4 nach- und der Sekundärseite 2.2 vorgeschaltetes und bei einer der Betriebsströmungsrichtung entgegengesetzten Strömung des Heizkreislaufmediums schließend ausgebildetes Rückschlagventil 5 vorgesehen ist und dass zweitens der Sekundärseite 2.2 in Betriebsströmungsrichtung gesehen eine Entgasungseinrichtung 6 nachgeschaltet ist. Wesentlich für die erfindungsgemäße Wärmepumpenanlage ist nun, dass die Entgasungseinrichtung 6 ab einer vordefinierten Gasmenge (an Wärmepumpenkreislaufmedium) im Heizkreislaufmedium eine Strömung des Heizkreislaufmediums in Betriebsströmungsrichtung unterbindend ausgebildet ist, wobei die Entgasungseinrichtung 6 einen Schwimmer 6.1 aufweist. Verfahrensmäßig ausgedrückt ist vorgesehen, dass ab einer vordefinierten Gasmenge des Wärmepumpenkreislaufmediums im Heizkreislaufmedium einerseits das Rückschlagventil 5 schließt und andererseits die Entgasungseinrichtung 6 eine Strömung des Heizkreislaufmediums in Betriebsströmungsrichtung unterbindet. Wie eingangs bereits erläutert wurde, bewirken diese Maßgaben, dass bei einem Leck am Wärmeübertrager 2 das Wärmepumpenkreislaufmedium jedenfalls nur in begrenztem Umfang in den Heizkreislauf 3 gelangen kann.

Dabei ist weiterhin besonders bevorzugt vorgesehen, dass an der Entgasungseinrichtung 6 ein Entlastungsventil 12 vorgesehen ist, über das das Wärmepumpenkreislaufmedium im Falle einer Leckage an die Umgebung des Gebäudes abführbar ist.

Die oben verwendete Maßgabe "vordefiniert" bedeutet dabei, dass die Entgasungseinrichtung 6 so ausgelegt ist, dass die Strömungsunterbindung erst ab einer bestimmten Leckagerate erfolgt, d. h. Leckagen unterhalb dieser "vordefinierten" Menge werden erfindungsgemäß durchaus toleriert bzw. über den nachfolgend noch erläuterten Entlüfter 7 abgeschieden, da von ihnen noch keine Gefahr ausgeht. Eine kleine Leckage über einen längeren Zeitraum würde allerdings natürlich von der Wärmepumpe selbst "bemerkt" werden und dann auch zu deren Abschalten führen.

Dabei ist besonders bevorzugt vorgesehen, dass wahlweise der Wärmeübertrager 2 und/oder die Entgasungseinrichtung 6 außerhalb eines den Heizkreislauf 3 teilweise aufnehmenden Gebäudes angeordnet ist bzw. sind, d. h. erfindungsgemäß wird dafür gesorgt, dass das Wärmepumpenkreislaufmedium erst gar nicht in das Gebäude gelangen und dort eventuell Schaden verursachen kann.

Zur weiteren Unterstützung dieser Sicherheitsfunktion ist dabei, wie bereits erläutert, ferner besonders bevorzugt vorgesehen, dass die Heizkreispumpe 4 bei Unterschreitung einer vorgegebenen Zufuhrmenge an Heizkreislaufmedium (zur Heizkreispumpe 4) selbsttätig ausschaltend ausgebildet ist bzw. selbsttätig ausschaltet, d. h. die Heizkreispumpe 4 schaltet ab, sobald an ihrem Pumpeneingang nicht mehr ausreichend Heizkreislaufmedium vorliegt, sprich die Gefahr droht, dass die Heizkreispumpe "leer" läuft. Die besagte Unterschreitung resultiert dabei aus der Wirkung der nachfolgend noch genauer beschriebenen Entgasungseinrichtung 6, die dafür sorgt, dass das Heizkreislaufmedium bei einem Leck im Wärmeübertrager 2 nicht mehr im Heizkreislauf 3 zirkulieren kann.

Bezüglich der Entgasungseinrichtung 6 ist dabei (und die nachfolgenden Erläuterungen gelten, sofern nichts anderes ausgeführt ist, für alle Ausführungsformen der erfindungsgemäßen Entgasungseinrichtungen) besonders bevorzugt vorgesehen, dass diese als Behälter mit einem Zulauf 6.2 und mit einem Ablauf 6.3 für das Heizkreislaufmedium ausgebildet ist. Dabei ist ferner besonders bevorzugt vorgesehen, dass der Zulauf 6.2 bei bestimmungsgemäßem Betrieb der Wärmepumpenanlage oberhalb des Ablaufs 6.3 angeordnet ist. Außerdem ist besonders bevorzugt vorgesehen, dass der Ablauf 6.3 an einer tiefsten Stelle 6.4 am Behälter angeordnet ist. Der Behälter weist dabei ferner vorzugsweise ein Volumen zur Aufnahme von Heizkreismedium von mindestens 1,5 Litern, besonders bevorzugt mindestens 2,5 Liter, ganz besonders bevorzugt mindestens 3,5 Liter auf. Dabei ist weiterhin bevorzugt vorgesehen, dass eine Strömungsgeschwindigkeit des Heizkreislaufmediums beim Übergang vom Zulauf 6.2 zum Behälter um mindestens 50%, vorzugsweise 75%, reduziert wird. Ganz besonders bevorzugt ist dabei vorgesehen, dass die Strömungsgeschwindigkeit im Behälter höchstens 0,4 m/s, ganz besonders bevorzugt höchstens 0,3 m/s, beträgt. Diese Maßgabe bringt dabei den ganz erheblichen Vorteil mit sich, dass möglichweise im Heizkreislaufmedium befindliches gasförmiges Wärmepumpenkreislaufmedium nicht zum Ablauf 6.3 mitgerissen wird, sondern im Behälter nach oben aufsteigen und dann abgeführt werden kann.

Zur Realisierung der Strömungsunterbindung ist, wie oben bereits erwähnt, vorgesehen, dass die Entgasungseinrichtung 6 einen im Leckagefall einen Stopfen bildenden Schwimmer 6.1 aufweist.

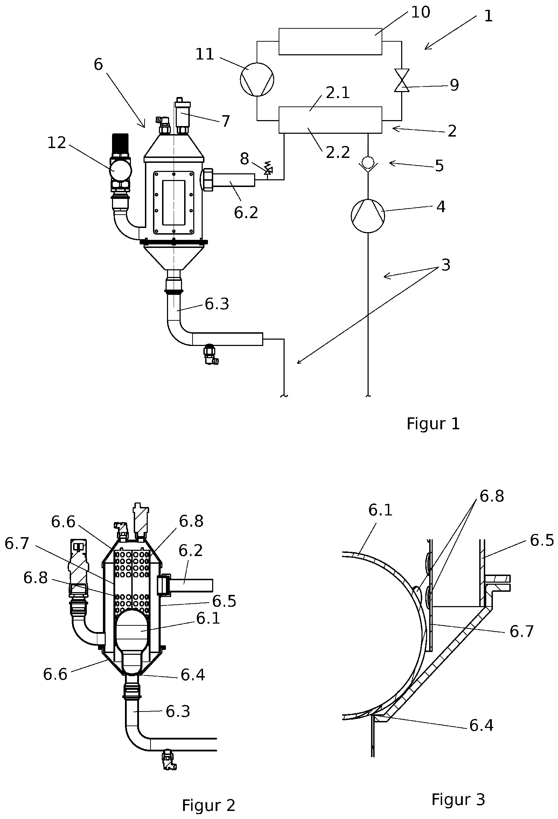

Bei der Ausführungsform gemäß Figur 2 ist dieser Schwimmer 6.1 dabei als länglicher, an seinem unteren Ende verjüngter Pfropfen ausgebildet. Bei der Ausführungsform gemäß Figur 3 ist der Schwimmer 6.1 dagegen als Kugel ausgebildet. Allen Ausführungsformen ist dabei natürlich gemein, dass der Schwimmer 6.1 eine geringere Dichte als das Heizkreislaufmedium hat und dementsprechend in diesem schwimmt, sofern die Entgasungseinrichtung 6 mit diesem gefüllt ist. Ist das Heizkreislaufmedium dagegen im Falle eines Lecks vom Wärmepumpenkreislaufmedium aus der Entgasungseinrichtung herausgepresst worden, so verschließt der Schwimmer 6.1 den oben bereits erwähnten Ablauf 6.3. Oder nochmals in anderen Worten ausgedrückt, ist somit besonders bevorzugt vorgesehen, dass der Schwimmer 6.1 unterhalb der vordefinierten Gasmenge im Heizkreismedium schwimmend (bei vollständig mit Heizkreismedium gefülltem Behälter oben im Behälter) und oberhalb der vordefinierten Gasmenge den Ablauf 6.3 verschließend ausgebildet ist.

Dazu ist im übrigen besonders bevorzugt vorgesehen, dass der Schwimmer 6.1 bei bestimmungsgemäßen Betrieb der Wärmepumpenanlage oberhalb der tiefsten Stelle 6.4 im Behälter angeordnet ist. Außerdem ist bevorzugt vorgesehen, dass der Schwimmer 6.1 bei bestimmungsgemäßen Betrieb der Wärmepumpenanlage innerhalb des Behälters vertikal verschieblich gelagert ist.

Noch etwas genauer betrachtet, ist - und dies gilt weiterhin für alle Ausführungsformen der Entgasungseinrichtung 6 - besonders bevorzugt vorgesehen, dass der oben genannte Behälter aus einer zylindrischen, beidseitig mit Deckelelementen 6.6 verschlossenen Hülle 6.5 gebildet ist. Dabei ist ferner besonders bevorzugt im Behälter ein vorzugsweise rohrförmiges Führungselement 6.7 für den Schwimmer 6.1 angeordnet. Wie in den Figuren 2 und 3 dargestellt, ist dabei weiterhin zur Strömungsberuhigung besonders bevorzugt vorgesehen, dass das Führungselement 6.7 Durchströmöffnungen 6.8 für das Heizkreislaufmedium aufweist, d. h. das Heizkreislaufmedium strömt vom Zulauf 6.2 in einen äußeren Bereich des Behälters und von dort durch die Durchströmöffnungen 6.8 in einen inneren Bereich des Behälters, wo der Schwimmer 6.1 beweglich gelagert ist und der in den Ablauf 6.3 mündet.

Schließlich ist noch bevorzugt vorgesehen, dass wahlweise zwischen dem Wärmeübertager 2 und der Entgasungseinrichtung 6 ein Sicherheitsventil 8 angeordnet ist und/oder dass die Entgasungseinrichtung 6 einen Entlüfter 7 (zur Schnellentlüftung bei geringen Gasmengen) aufweist, wobei zusätzlich an der Entgasungseinrichtung 6 - wie dargestellt - auch noch ein Ventil zum händischen Entlüften vorgesehen sein kann.

Die erfindungsgemäße Wärmepumpenanlage funktioniert ohne Leck bzw. Leckage am Wärmeübertrager 2, also bei ordnungsgemäßen Betrieb, wie folgt:
Das vom Wärmeübertrager 2 kommende Heizkreislaufmedium strömt über den Zulauf 6.2 in den Behälter der Entgasungseinrichtung 6. Dieser ist mit Heizkreislaufmedium gefüllt, so dass der Schwimmer 6.1, geführt vom mit Durchströmöffnungen 6.8 versehenen Führungselement 6.7, oben im Heizkreislaufmedium schwimmt. An der tiefsten Stelle 6.4 des Behälters ist der Ablauf 6.3 angeordnet, über den das Heizkreislaufmedium die Entgasungseinrichtung 6 wieder verlässt und in Richtung zum Beispiel der Heizkörper strömt.

Tritt nun eine nennenswerte Leckage am Wärmeübertrager 2 auf, tritt also, was absolut unerwünscht ist, insbesondere brennbares Wärmepumpenkreislaufmedium (zum Beispiel Propan) aus dem mit einem sehr hohen Druck betriebenen Wärmepumpenkreislauf 1 in größerer Menge in den mit einem deutlich niedrigeren Druck betriebenen Heizkreislauf 3, so wird das im Behälter der Entgasungseinrichtung 6 gelagerte Heizkreislaufmedium aus diesem herausgedrückt, so dass der Schwimmer 6.1 nach unten gelangt und dann aufgrund des dann hohen Drucks im Behälter den Ablauf 6.3 solange dicht verschließt, bis wesentliche Mengen des Wärmepumpenkreislaufmediums über die Entlastungsventil 12 abgeblasen wurden, wobei der Verschluss des Ablaufs 6.3, wie beschrieben und vom Sog der Heizkreispumpe 4 sogar selbst gefördert, dazu führt, dass auch die Heizkreispumpe 4 ihren Betrieb einstellt, d. h. die gesamte Wärmepumpenanlage geht, was bei dieser Art von Fehler folgerichtig ist, komplett auf Störung, wobei, da das Entlastungsventil 12 im Freien ausmündend ausgebildet ist, erfindungsgemäß dafür gesorgt ist, dass kein brennbares Wärmepumpenkreislaufmedium in das zu beheizende Gebäude gelangen kann.

### Bezugszeichenliste

- 1: Wärmepumpenkreislauf
- 2: Wärmeübertrager
- 2.1: Primärseite
- 2.2: Sekundärseite
- 3: Heizkreislauf
- 4: Heizkreispumpe
- 5: Rückschlagventil
- 6: Entgasungseinrichtung
- 6.1: Schwimmer
- 6.2: Zulauf
- 6.3: Ablauf
- 6.4: tiefste Stelle am Behälter
- 6.5: Hülle
- 6.6: Deckelelement
- 6.7: Führungselement
- 6.8: Durchströmöffnung
- 7: Entlüfter
- 8: Sicherheitsventil
- 9: Drosseleinrichtung
- 10: Wärmeübertager
- 11: Verdichter
- 12: Entlastungsventil

## Patentansprüche

1. Wärmepumpenanlage, umfassend einen eine Primärseite (2.1) und eine Sekundärseite (2.2) aufweisenden Wärmeübertrager (2), einen Wärmepumpenkreislauf (1) für ein die Primärseite (2.1) des Wärmeübertragers (2) durchströmendes Wärmepumpenkreislaufmedium und einen Heizkreislauf (3) für ein die Sekundärseite (2.2) des Wärmeübertragers (2) durchströmendes Heizkreislaufmedium, wobei der Sekundärseite (2.2) des Wärmeübertragers (2) in Betriebsströmungsrichtung des Heizkreislaufmediums gesehen eine Heizkreispumpe (4) vorgeschaltet ist, wobei in Betriebsströmungsrichtung des Heizkreislaufmediums gesehen ein der Heizkreispumpe (4) nach- und der Sekundärseite (2.2) vorgeschaltetes und bei einer der Betriebsströmungsrichtung entgegengesetzten Strömung des Heizkreislaufmediums schließend ausgebildetes Rückschlagventil (5) vorgesehen ist, wobei der Sekundärseite (2.2) in Betriebsströmungsrichtung gesehen eine Entgasungseinrichtung (6) nachgeschaltet ist,
**dadurch gekennzeichnet,**
**dass** die Entgasungseinrichtung (6) ab einer vordefinierten Gasmenge im Heizkreislaufmedium eine Strömung des Heizkreislaufmediums in Betriebsströmungsrichtung unterbindend ausgebildet ist, wobei die Entgasungseinrichtung (6) einen Schwimmer (6.1) aufweist.

2. Wärmepumpenanlage nach Anspruch 1,
**dadurch gekennzeichnet,**
**dass** die Entgasungseinrichtung (6) als Behälter mit einem Zulauf (6.2) und mit einem Ablauf (6.3) für das Heizkreislaufmedium ausgebildet ist.

3. Wärmepumpenanlage nach Anspruch 2,
**dadurch gekennzeichnet,**
**dass** der Zulauf (6.2) bei bestimmungsgemäßem Betrieb der Wärmepumpenanlage, also wenn das Heizkreislaufmedium in Betriebsströmungsrichtung durch den Heizkreislauf gepumpt wird, oberhalb des Ablaufs (6.3) angeordnet ist.

4. Wärmepumpenanlage nach Anspruch 2 oder 3,
**dadurch gekennzeichnet,**
**dass** der Ablauf (6.3) an einer tiefsten Stelle (6.4) am Behälter angeordnet ist.

5. Wärmepumpenanlage nach Anspruch 4,
**dadurch gekennzeichnet,**
**dass** der Schwimmer (6.1) bei bestimmungsgemäßen Betrieb der Wärmepumpenanlage, also wenn das Heizkreislaufmedium in Betriebsströmungsrichtung durch den Heizkreislauf gepumpt wird, oberhalb der tiefsten Stelle (6.4) im Behälter angeordnet ist.

6. Wärmepumpenanlage nach Anspruch 2,
**dadurch gekennzeichnet,**
**dass** der Schwimmer (6.1) bei bestimmungsgemäßen Betrieb der Wärmepumpenanlage, also wenn das Heizkreislaufmedium in Betriebsströmungsrichtung durch den Heizkreislauf gepumpt wird, innerhalb des Behälters vertikal verschieblich gelagert ist.

7. Wärmepumpenanlage nach Anspruch 2,
**dadurch gekennzeichnet,**
**dass** der Schwimmer (6.1) unterhalb der vordefinierten Gasmenge auf dem Heizkreislaufmedium schwimmend und oberhalb der vordefinierten Gasmenge den Ablauf (6.3) verschließend ausgebildet ist.

8. Wärmepumpenanlage nach einem der Ansprüche 1 bis 7,
**dadurch gekennzeichnet,**
**dass** die Heizkreispumpe (4) bei Unterschreitung einer vorgegebenen Zufuhrmenge an Heizkreislaufmedium selbsttätig ausschaltend ausgebildet ist.

9. Gebäude mit einer Wärmepumpenanlage nach einem der Ansprüche 1 bis 8,
**dadurch gekennzeichnet,**
**dass** wahlweise der Wärmeübertrager (2) und/oder die Entgasungseinrichtung (6) außerhalb des den Heizkreislauf (3) teilweise aufnehmenden Gebäudes angeordnet ist bzw. sind.

10. Verfahren zum Betrieb einer Wärmepumpenanlagen gemäß einem der Patentansprüche 1 bis 9,
**dadurch gekennzeichnet,**
**dass** ab einer vordefinierten Gasmenge des Wärmepumpenkreislaufmediums im Heizkreislaufmedium einerseits das Rückschlagventil (5) schließt und andererseits die Entgasungseinrichtung (6) eine Strömung des Heizkreislaufmediums in Betriebsströmungsrichtung unterbindet.

11. Verfahren nach Anspruch 10,
**dadurch gekennzeichnet,**
**dass** die Heizkreispumpe (4) bei Unterschreitung einer vorgegebenen Zufuhrmenge an Heizkreislaufmedium zur Heizkreispumpe (4) selbsttätig ausschaltet.

12. Verfahren nach Anspruch 10 oder 11, wobei das Heizkreislaufmedium über einen Zulauf (6.2) in einen Behälter der Entgasungseinrichtung (6) einströmt,
**dadurch gekennzeichnet,**
**dass** eine Strömungsgeschwindigkeit des Heizkreislaufmediums beim Übergang vom Zulauf (6.2) zum Behälter um mindestens 50% reduziert wird.

## Claims

1. A heat pump system, comprising a heat exchanger (2) having a primary side (2.1) and a secondary side (2.2), a heat pump circuit (1) for a heat pump circuit medium flowing through the primary side (2.1) of the heat exchanger (2), and a heating circuit (3) for a heating circuit medium flowing through the secondary side (2.2) of the heat exchanger (2), wherein a heating circuit pump (4) is connected upstream of the secondary side (2.2) of the heat exchanger (2) when viewed in the operating flow direction of the heating circuit medium, wherein when viewed in the operating flow direction of the heating circuit medium, a check valve (5) is provided which is connected downstream of the heating circuit pump (4) and upstream of the secondary side (2.2), and which is designed to close when there is a flow of heating circuit medium opposite the operating flow direction, wherein a degassing device (6) is connected downstream of the secondary side (2.2), **characterized in that**,
when viewed in the operating flow direction, the degasing device (6) is designed to prevent a flow of the heating circuit medium in the operating flow direction from a predefined gas amount in the heating circuit medium, wherein the degassing device (6) has a floater (6.1).

2. The heat pump system according to Claim 1, **characterized in that**
the degassing device (6) is designed as a container with an inlet (6.2) and with an outlet (6.3) for the heating circuit medium.

3. The heat pump system according to Claim 2, **characterized in that**
the inlet (6.2) is arranged above the outlet (6.3) when the heat pump system is operating as intended, i.e. when the heating circuit medium is pumped through the heating circuit in the operating flow direction.

4. The heat pump system according to Claim 2 or 3, **characterized in that**
the outlet (6.3) is arranged at a lowest point (6.4) on the container.

5. The heat pump system according to Claim 4, **characterized in that**
the floater (6.1) is arranged above the lowest point (6.4) in the container during intended operation of the heat pump system, i.e. when the heating circuit medium is pumped through the heating circuit in the operating flow direction.

6. The heat pump system according to Claim 2, **characterized in that**
the floater (6.1) is vertically displaceable within the container during intended operation of the heat pump system, i.e. when the heating circuit medium is pumped through the heating circuit in the operating flow direction.

7. The heat pump system according to Claim 2, **characterized in that**
the floater (6.1) is designed to float on the heating circuit medium below the predefined gas amount, and to close the outlet (6.3) above the predefined gas amount.

8. The heat pump system according to one of Claims 1 to 7,
**characterized in that**
the heating circuit pump (4) is designed to switch off automatically in the case of a shortfall in a predetermined supply quantity of heating circuit medium.

9. Building with a heat pump system according to one of Claims 1 to 8,
**characterized in that**
the heat exchanger (2) and/or the degassing device (6) is or are selectively arranged outside a building partially receiving the heating circuit (3).

10. A method for operating a heat pump system according to one of Claims 1 to 9,
**characterized in that**
from a predefined gas amount of the heat pump circuit medium in the heating circuit medium, on the one hand, the check valve (5) closes and, on the other hand, the degassing device (6) prevents a flow of the heating circuit medium in the operating flow direction.

11. The method according to Claim 10,
**characterized in that**
the heating circuit pump (4) switches off automatically in the case of a shortfall in a predetermined supply quantity of heating circuit medium to the heating circuit pump (4).

12. The method according to Claim 10 or 11, wherein the heating circuit medium flows via an inlet (6.2) into a container of the degassing device (6), **characterized in that**
a flow rate of the heating circuit medium is reduced by at least 50 % at the transition from the inlet (6.2) to the container.

## Revendications

1. Installation de pompe à chaleur, comprenant un échangeur de chaleur (2) comportant un côté primaire (2.1) et un côté secondaire (2.2), un circuit (1) de pompe à chaleur pour un agent de circuit de pompe à chaleur traversant le côté primaire (2.1) de l'échangeur de chaleur (2) et un circuit de chauffage (3) pour un agent de circuit de chauffage traversant le côté secondaire (2.2) de l'échangeur de chaleur (2), considérée dans la direction d'écoulement fonctionnelle de l'agent de circuit de chauffage, une pompe (4) de circuit de chauffage étant montée en amont du côté secondaire (2.2) de l'échangeur de chaleur (2), considéré dans la direction d'écoulement fonctionnelle de l'agent de circuit de chauffage étant prévu un clapet antiretour (5) monté en aval de la pompe (4) de circuit de chauffage et en amont du côté secondaire (2.2) et conçu de manière à fermer lors d'un écoulement de l'agent de circuit de chauffage opposé à la direction d'écoulement fonctionnelle, considéré dans la direction d'écoulement fonctionnelle, un système de dégazage (6) étant monté en aval du côté secondaire (2.2),
**caractérisé**
**en ce qu'**à partir d'une quantité de gaz prédéfinie dans l'agent de circuit de chauffage, le système de dégazage (6) empêche un écoulement de l'agent de circuit de chauffage dans la direction d'écoulement fonctionnelle, le système de dégazage (6) comportant un flotteur (6.1).

2. Installation de pompe à chaleur selon la revendication 1,
**caractérisé**
**en ce que** le système de dégazage (6) est conçu sous la forme d'un réservoir pourvu d'une arrivée (6.2) et d'une évacuation (6.3) pour l'agent de circuit de chauffage.

3. Installation de pompe à chaleur selon la revendication 2,
**caractérisé**
**en ce que** lors d'un fonctionnement conforme de l'installation de pompe à chaleur, donc lorsque l'agent de circuit de chauffage est pompé dans la direction d'écoulement fonctionnelle à travers le circuit de chauffage, l'arrivée (6.2) est placée au-dessus de l'évacuation (6.3).

4. Installation de pompe à chaleur selon la revendication 2 ou 3,
**caractérisé**
**en ce que** l'évacuation (6.3) est placée à un point (6.4) le plus bas sur le réservoir.

5. Installation de pompe à chaleur selon la revendication 4,
**caractérisé**
**en ce que** lors d'un fonctionnement conforme de l'installation de pompe à chaleur, donc lorsque l'agent de circuit de chauffage est pompé dans la direction d'écoulement fonctionnelle à travers le circuit de chauffage, le flotteur (6.1) est placé au point (6.4) le plus bas dans le réservoir.

6. Installation de pompe à chaleur selon la revendication 2,
**caractérisé**
**en ce que** lors d'un fonctionnement conforme de l'installation de pompe à chaleur, donc lorsque l'agent de circuit de chauffage est pompé dans la direction d'écoulement fonctionnelle à travers le circuit de chauffage, le flotteur (6.1) est placé à l'intérieur du réservoir en étant déplaçable à la verticale.

7. Installation de pompe à chaleur selon la revendication 2,
**caractérisé**
**en ce que** le flotteur (6.1) est conçu de sorte à flotter au-dessus de l'agent de circuit de chauffage, à une valeur située en dessous de la quantité de gaz prédéfinie et de sorte à fermer l'évacuation (6.3) à une valeur située au-dessus de la quantité de gaz prédéfinie.

8. Installation de pompe à chaleur selon l'une quelconque des revendications 1 à 7,
**caractérisé**
**en ce que** lors d'une non-atteinte d'une quantité d'alimentation prédéterminée de l'agent de circuit de chauffage, la pompe (4) de circuit de chauffage est conçue pour se mettre automatiquement à l'arrêt.

9. Bâtiment, équipé d'une installation de pompe à chaleur selon l'une quelconque des revendications 1 à 8, **caractérisé**
**en ce que** sélectivement, l'échangeur de chaleur (2) et / ou le système de dégazage (6) est ou sont placé(s) à l'extérieur du bâtiment recevant partiellement le circuit de chauffage (3).

10. Procédé opérationnel d'une installation de pompe à chaleur selon l'une quelconque des revendications 1 à 9 du brevet,
**caractérisé**
**en ce qu'**à partir d'une quantité de gaz prédéfinie de l'agent de circuit de pompe à chaleur dans l'agent de circuit de chauffage, d'une part le clapet antiretour (5) se ferme et d'autre part, le système de dégazage (6) empêche un écoulement de l'agent de circuit de chauffage dans la direction d'écoulement fonctionnelle.

11. Procédé selon la revendication 10,
**caractérisé**
**en ce que** lors d'une non-atteinte d'une quantité d'alimentation prédéterminée d'agent de circuit de chauffage vers la pompe (4) du circuit de chauffage, la pompe (4) de circuit de chauffage se met automatiquement à l'arrêt.

12. Procédé selon la revendication 10 ou 11, l'agent de circuit de chauffage s'écoulant par l'intermédiaire d'une arrivée (6.2) dans un réservoir du système de dégazage (6),
**caractérisé**
**en ce qu'**une vitesse d'écoulement de l'agent de circuit de chauffage se réduit d'au moins 50 % lors du passage de l'arrivée (6.2) vers le réservoir.
